(19) Europäisches Patentamt
European Patent Office
Office européen des brevets

(11) **EP 3 144 887 A1**

(12) **EUROPEAN PATENT APPLICATION**

(43) Date of publication:
**22.03.2017 Bulletin 2017/12**

(51) Int Cl.:
***G06T 5/50*** *(2006.01)*

(21) Application number: **15306448.0**

(22) Date of filing: **17.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **BLONDÉ, Laurent**
**35576 CESSON-SÉVIGNÉ (FR)**
• **DRAZIC, Valter**
**35576 CESSON-SÉVIGNÉ (FR)**
• **SEIFI, Mozhdeh**
**35576 CESSON-SÉVIGNÉ (FR)**

(74) Representative: **Browaeys, Jean-Philippe**
**TECHNICOLOR**
**1-5, rue Jeanne d'Arc**
**92130 Issy-les-Moulineaux (FR)**

(54) **A METHOD AND AN APPARATUS FOR GENERATING DATA REPRESENTATIVE OF A PIXEL BEAM**

(57)    There are several types of plenoptic devices and camera arrays available on the market, and all these light field acquisition devices have their proprietary file format. However, there is no standard supporting the acquisition and transmission of multidimensional information. It is interesting to obtain information related to a correspondence between pixels of a sensor of said optical acquisition system and an object space of said optical acquisition system. Indeed, knowing which portion of the object space of an optical acquisition system a pixel belonging to the sensor of said optical acquisition system is sensing enables the improvement of signal processing operations. The notion of pixel beam, which represents a volume occupied by a set of rays of light in an object space of an optical system of a camera along with a compact format for storing such information is thus introduce.

**FIG. 12**

EP 3 144 887 A1

**Description**

TECHNICAL FIELD

The present invention relates to generation of data representing a light field.

BACKGROUND

The acquisition of four-dimensional or 4D light-field data, which can be viewed as a sampling of a 4D light field, i.e. the recording of light rays, is explained in the article "Understanding camera trade-offs through a Bayesian analysis of light field projections" by Anat Levin and al., published in the conference proceedings of ECCV 2008 is an hectic research subject.

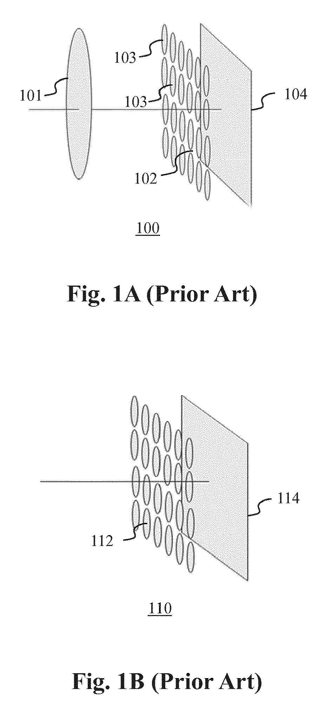

Compared to classical two-dimensional or 2D images obtained from a camera, 4D light-field data enable a user to have access to more post-processing features that enhance the rendering of images and the interactivity with the user. For example, with 4D light-field data, it is possible to perform refocusing of images with freely selected distances of focalization meaning that the position of a focal plane can be specified/selected a posteriori, as well as changing slightly the point of view in the scene of an image. In order to acquire 4D light-field data, several techniques can be used. For example, a plenoptic camera is able to acquire 4D light-field data. Details of the architecture of a plenoptic camera are provided in **Figure 1A.** Figure 1A is a diagram schematically representing a plenoptic camera 100. The plenoptic camera 100 comprises a main lens 101, a microlens array 102 comprising a plurality of micro-lenses 103 arranged in a two-dimensional array and an image sensor 104.

Another way to acquire 4D light-field data is to use a camera array as depicted in **Figure 1B.** Figure 1B represents a multi-array camera 110. The multi-array camera 110 comprises a lens array 112 and an image sensor 114.

In the example of the plenoptic camera 100 as shown in figure 1A, the main lens 101 receives light from an object (not shown on the figure) in an object field of the main lens 101 and passes the light through an image field of the main lens 101.

At last, another way of acquiring a 4D light field is to use a conventional camera that is configured to capture a sequence of 2D images of a same scene at different focal planes. For example, the technique described in the document "Light ray field capture using focal plane sweeping and its optical reconstruction using 3D display /' by J.-H. Park et al., published in OPTICS EXPRESS, Vol. 22, No. 21 , in October 2014, may be used to achieve the acquisition of 4D light field data by means of a conventional camera.

There are several ways to represent 4D light-field data. Indeed, in the Chapter 3.3 of the Ph.D dissertation thesis entitled "Digital Light Field Photography" by Ren Ng, published in July 2006, three different ways to represent 4D light-field data are described. Firstly, 4D light-field data can be represented, when recorded by a plenoptic camera by a collection of micro-lens images. 4D light-field data in this representation are named raw images or raw 4D light-field data. Secondly, 4D light-field data can be represented, either when recorded by a plenoptic camera or by a camera array, by a set of sub-aperture images. A sub-aperture image corresponds to a captured image of a scene from a point of view, the point of view being slightly different between two sub-aperture images. These sub-aperture images give information about the parallax and depth of the imaged scene. Thirdly, 4D light-field data can be represented by a set of epipolar images see for example the article entitled . "Generating EPI Representation of a 4D Light Fields with a Single Lens Focused Plenoptic Camera", by S. Wanner and al., published in the conference proceedings of ISVC 2011.Light-field data can take up large amounts of storage space which can make storage cumbersome and processing less efficient. In addition light-field acquisition devices are extremely heterogeneous. Light-field cameras are of different types for example plenoptic or camera arrays. Within each type there are many differences such as different optical arrangements, or micro-lenses of different focal lengths. Each camera has its own proprietary file format. At present there is no standard supporting the acquisition and transmission of multi-dimensional information for an exhaustive over-view of the different parameters upon which a light-field depends. As such, acquired light-field data for different cameras have a diversity of formats. The present invention has been devised with the foregoing in mind.

SUMMARY OF INVENTION

According to a first aspect of the invention there is provided a computer implemented method for generating data representative of a volume in an object space of an optical acquisition system occupied by a set of rays of light that at least one pixel of a sensor of said optical acquisition system can sense through a pupil of said optical acquisition system, said volume being called a pixel beam, comprising :

-    computing a rotation angle of a first straight line describing a surface of a hyperboloid of one sheet representing the pixel beam, called first generating ray, around a second straight line being a revolution axis of the hyperboloid, said rotation transforming the first generating ray into a second generating ray crossing a reference straight line to provide data representative of the pixel beam.

According to an embodiment of the invention, the reference straight line is parallel to an optical axis of a main lens of the optical acquisition system.

According to an embodiment of the invention, the reference straight line is parallel to a central axis of a lens-array of the optical acquisition system.

According to an embodiment of the invention, computing the rotation angle consists in :

- computing coordinates of a vector defining the second generating ray by multiplying a vector defining the first generating ray with a rotation matrix,
- the distance between the second generating ray and the reference straight line being equal to zero since said second generating ray and said reference straight line cross each other, computing the value of the rotation angle based on the points and vectors defining said second generating ray and said reference straight line.

According to an embodiment of the invention, providing data representative of the pixel beam further comprises :

- computing intersection data defining intersections of the second generating ray and the revolution axis with a plurality of given reference planes, said reference planes being parallel to one another and corresponding to different depths in the object space;
- obtaining ray diagram parameters defining the graphical representation of the intersection data in a 2D ray diagram, and
- associating said ray diagram parameters to provide data representative of the pixel beam.

According to an embodiment of the invention, the intersection data corresponding to the second generating ray and the revolution axis are graphically represented in the ray diagram as datalines and the ray diagram parameters include data representative of at least one of:

- the slope of a dataline; and
- an intersection of a dataline with an axis of the ray diagram.

According to an embodiment of the invention, the data representative of the pixel beam further comprises colour data representing the colour of the corresponding second generating ray and revolution axis.

Another object of the invention concerns an apparatus for generating data representative of a volume in an object space of an optical acquisition system occupied by a set of rays of light that at least one pixel of a sensor of said optical acquisition system can sense through a pupil of said optical acquisition system, said volume being called a pixel beam, said apparatus comprising a processor configured to :

- compute a rotation angle of a first straight line describing a surface of a hyperboloid of one sheet representing the pixel beam, called first generating ray, around a second straight line being a revolution axis of the hyperboloid, said rotation transforming the first generating ray into a second generating ray crossing a reference straight line to provide data representative of the pixel beam.

According to an embodiment of the invention, the processor is configured to compute the rotation angle by :

- computing coordinates of a vector defining the second generating ray by multiplying a vector defining the first generating ray with a rotation matrix,
- the distance between the second generating ray and the reference straight line being equal to zero since said second generating ray and said reference straight line cross each other, computing the value of the rotation angle based on the vectors defining said second generating ray and said reference straight line.

According to an embodiment of the invention, the processor is further configured to :

- compute intersection data defining intersections of the second generating ray and the revolution axis with a plurality of given reference planes, said reference planes being parallel to one another and corresponding to different depths in the object space;

- obtain ray diagram parameters defining the graphical representation of the intersection data in a 2D ray diagram, and

- associate said ray diagram parameters to provide data representative of the pixel beam.

The invention further concerns a light field imaging device comprising :

- an array of micro lenses arranged in a regular lattice structure;

- a photosensor configured to capture light projected on the photosensor from the array of micro lenses, the photosensor comprising sets of pixels, each set of pixels being optically associated with a respective micro lens of the array of micro lenses; and

- a device for providing metadata in accordance with claim 8.

The invention concerns a device for rendering an image from light field data obtained in accordance with the method of any one of claims 1 to 7.

Another aspect of the invention concerns a data package for data representative of a volume in an object space of an optical acquisition system occupied by a set of rays of light that at least one pixel of a sensor of said optical acquisition system can sense through a pupil of said optical acquisition system, said volume being called a pixel beam, comprising a ray diagram parameters defining the graphical representation in a 2D ray diagram of intersection data of the light rays representative of the pixel beam, the intersection data defining intersections of the light field rays representative of the pixel beam with a plurality of given reference planes, said reference planes being parallel to one another and corresponding to different depths in the object space; colour data defining colours of the light field rays representative of the pixel beam.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

Embodiments of the invention will now be described, by way of example only, and with reference to the following drawings in which:

FIG. 1A is a diagram schematically representing a plenoptic camera;
FIG. 1B represents a multi-array camera,
FIG. 2A is a functional diagram of a light-field camera according to an embodiment of the invention;
Figure 2B is a functional diagram of a light-field data formator and light-field data processor according to an embodiment of the invention;
FIG. 3 is an example of a raw light-field image formed on a photosensor array;
FIG. 4 represents a volume occupied by a set of rays of light in an object space of an optical system of a camera or optical acquisition system,
FIG. 5 represents a hyperboloid of one sheet,
FIG. 6A is a functional block diagram illustrating modules of a device for sorting generating rays of a pixel beam in accordance with one or more embodiments of the invention;
FIG. 6B is a flow chart illustrating steps of a method for sorting the generating rays of a pixel beam in accordance with one or more embodiments of the invention
FIG. 7A and 7B graphically illustrate the use of reference planes for parameterisation of light-field data in accordance with one or more embodiments of the invention;
FIG. 8 schematically illustrates representation of light-field rays with respect to reference planes in accordance with embodiments of the invention,
FIG. 9A is a flow chart illustrating steps of a method in accordance with one or more embodiments of the invention;

FIG. 9B is a functional block diagram illustrating modules of a device for providing a light data format in accordance with one or more embodiments of the invention;

FIG. 10 schematically illustrates parameters for representation of light-field rays in accordance with embodiments of the invention;

FIG. 11 is a 2D ray diagram graphically illustrating intersection data in accordance with embodiments of the invention;

FIG. 12 graphically illustrates a digital line generated in accordance with embodiments of the invention;

FIG. 13 graphically illustrates digitals line generated in accordance with embodiments of the invention;

FIG. 14A-14C graphically illustrate Radon transforms applied to a digital line in accordance with embodiments of the invention; and

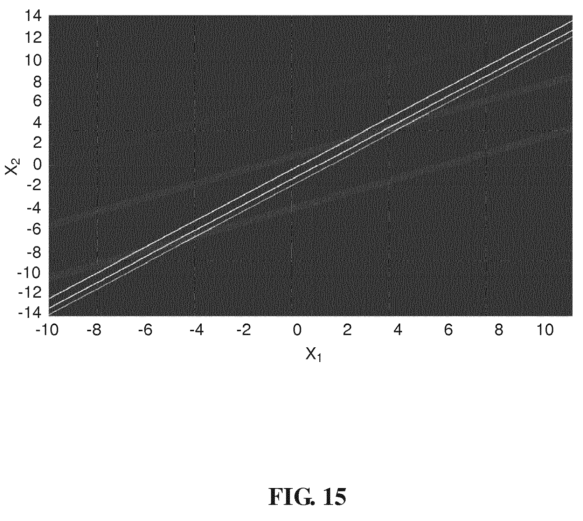

FIG 15 is a 2D ray diagram graphically illustrating intersection data for a plurality of cameras in accordance with embodiments of the invention.

## DETAILED DESCRIPTION

As will be appreciated by one skilled in the art, aspects of the present principles can be embodied as a system, method or computer readable medium. Accordingly, aspects of the present principles can take the form of an entirely hardware embodiment, an entirely software embodiment, (including firmware, resident software, micro-code, and so torth) or an embodiment combining software and hardware aspects that can all generally be referred to herein as a "circuit", "module", or "system". Furthermore, aspects of the present principles can take the form of a computer readable storage medium. Any combination of one or more computer readable storage medium(a) may be utilized.

Embodiments of the invention provide formatting of light-field data for further processing applications such as format conversion, refocusing, viewpoint change and 3D image generation.

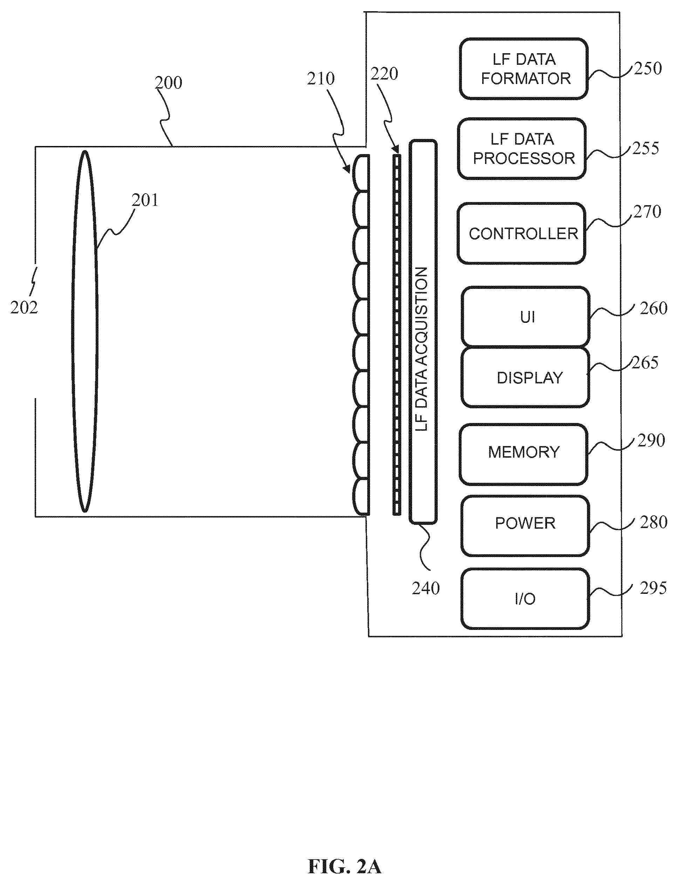

**Figure 2A** is a block diagram of a light-field camera device in accordance with an embodiment of the invention. The light-field camera comprises an aperture/shutter 202, a main (objective) lens 201, a micro lens array 210 and a photosensor array 220 in accordance with the light-field camera of Figure 1A. In some embodiments the light-field camera includes a shutter release that is activated to capture a light-field image of a subject or scene. It will be appreciated that the functional features may also be applied to the light-field camera of Figure 1B.

The photosensor array 220 provides light-field image data which is acquired by LF Data acquisition module 240 for generation of a light-field data format by light-field data formatting module 250 and/or for processing by light-field data processor 255. Light-field data may be stored, after acquisition and after processing, in memory 290 in a raw data format, as sub aperture images or focal stacks, or in a light-field data format in accordance with embodiments of the invention.

In the illustrated example, the light-field data formatting module 150 and the light-field data processor 255 are disposed in or integrated into the light-field camera 200. In other embodiments of the invention the light-field data formatting module 250 and/or the light-field data processor 255 may be provided in a separate component external to the light-field capture camera. The separate component may be local or remote with respect to the light-field image capture device. It will be appreciated that any suitable wired or wireless protocol may be used for transmitting light-field image data to the formatting module 250 or light-field data processor 255; for example the light-field data processor may transfer captured light-field image data and/ or other data via the Internet, a cellular data network, a WiFi network, a BlueTooth communication protocol, and/ or any other suitable means.

The light-field data formatting module 250 is configured to generate data representative of the acquired light-field, in accordance with embodiments of the invention. The light-field data formatting module 250 may be implemented in software, hardware or a combination thereof.

The light-field data processor 255 is configured to operate on raw light-field image data received directly from the LF data acquisition module 240 for example to generate focal stacks or a matrix of views in accordance with embodiments of the invention. Output data, such as, for example, still images, 2D video streams, and the like of the captured scene may be generated. The light-field data processor may be implemented in software, hardware or a combination thereof.

In at least one embodiment, the light-field camera 200 may also include a user interface 260 for enabling a user to provide user input to control operation of camera 100 by controller 270. Control of the camera may include one or more of control of optical parameters of the camera such as shutter speed, or in the case of an adjustable light-field camera, control of the relative distance between the microlens array and the photosensor, or the relative distance between the objective lens and the microlens array. In some embodiments the relative distances between optical elements of the light-field camera may be manually adjusted. Control of the camera may also include control of other light-field data acquisition parameters, light-field data formatting parameters or light-field processing parameters of the camera. The user interface 260 may comprise any suitable user input device(s) such as a touchscreen, buttons, keyboard, pointing device, and/ or the like. In this way, input received by the user interface can be used to control and/ or configure the LF data formatting module 250 for controlling the data formatting, the LF data processor 255 for controlling the processing of the acquired light-field data and controller 270 for controlling the light-field camera 200.

The light-field camera includes a power source 280, such as one or more replaceable or rechargeable batteries. The light-field camera comprises memory 290 for storing captured light-field data and/or rendered final images or other data such as software for implementing methods of embodiments of the invention. The memory can include external and/ or internal memory. In at least one embodiment, the memory can be provided at a separate device and/ or location from camera 200. In one embodiment, the memory includes a removable/swappable storage device such as a memory stick.

The light-field camera may also include a display unit 265 (e.g., an LCD screen) for viewing scenes in front of the camera prior to capture and/or for viewing previously captured and/or rendered images. The screen 265 may also be used to display one or more menus or other information to the user. The light-field camera may further include one or more I/O interfaces 295, such as FireWire or Universal Serial Bus (USB) interfaces, or wired or wireless communication interfaces for data communication via the Internet, a cellular data network, a WiFi network, a BlueTooth communication protocol, and/ or any other suitable means. The I/O interface 295 may be used for transferring data, such as light-field representative data generated by LF data formatting module in accordance with embodiments of the invention and light-field data such as raw light-field data or data processed by LF data processor 255, to and from external devices such as computer systems or display units, for rendering applications.

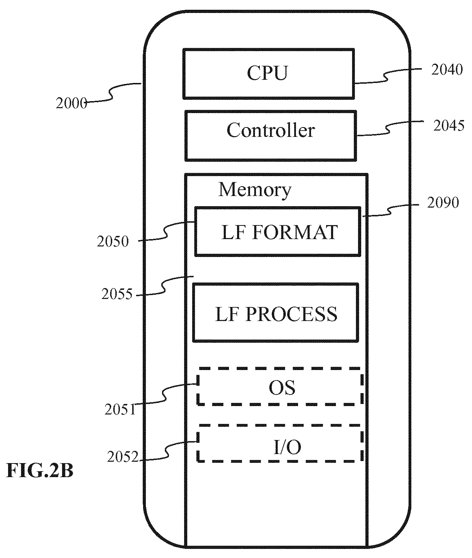

**Figure 2B** is a block diagram illustrating a particular embodiment of a potential implementation of light-field data formatting module 250 and the light-field data processor 253.

The circuit 2000 includes memory 2090, a memory controller 2045 and processing circuitry 2040 comprising one or more processing units (CPU(s)). The one or more processing units 2040 are configured to run various software programs and/or sets of instructions stored in the memory 2090 to perform various functions including light-field data formatting and light-field data processing. Software components stored in the memory include a data formatting module (or set of instructions) 2050 for generating data representative of acquired light data in accordance with embodiments of the invention and a light-field data processing module (or set of instructions) 2055 for processing light-field data in accordance with embodiments of the invention. Other modules may be included in the memory for applications of the light-field camera device such as an operating system module 2051 for controlling general system tasks (e.g. power management, memory management) and for facilitating communication between the various hardware and software components of the device 2000, and an interface module 2052 for controlling and managing communication with other devices via I/O interface ports.

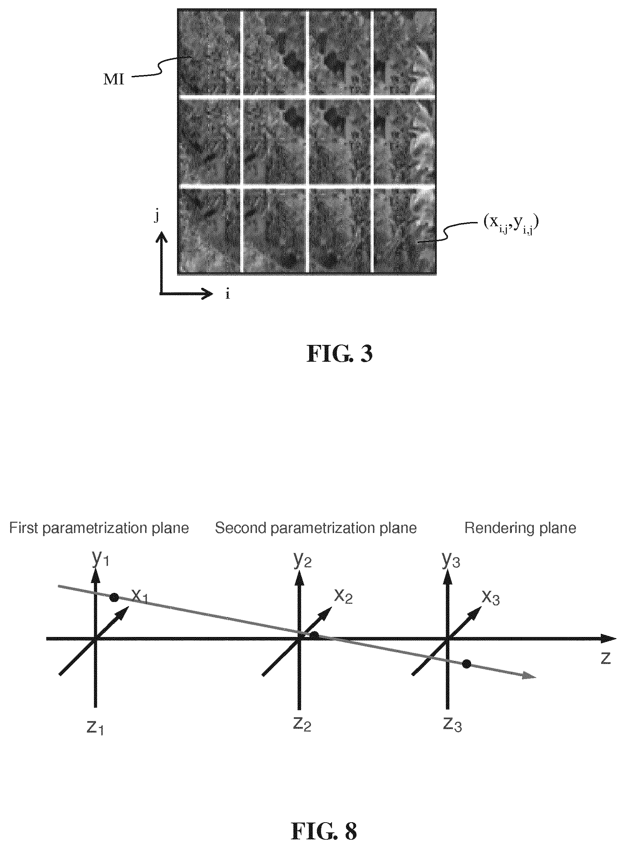

**Figure 3** illustrates an example of a 2D image formed on the photosensor array 104 of Figure 1A or the photosensor array 114 of Figure 1B. The 2D image, often referred to as a raw image representing 4D light-field, is composed of an array of micro images MI, each micro image being produced by the respective micro lens ($i, j$) of the microlens array 102,112. The micro images are arranged in the array in a rectangular lattice structure defined by axes i and $j$. A micro lens image may be referenced by the respective micro lens coordinates ($i, j$). A pixel PI of the photosensor 104, 114 may be referenced by its spatial coordinates ($x, y$). 4D light-field data associated with a given pixel may be referenced as ($x, y, i, j$).

There are several ways of representing (or defining) a 4D light-field image. For example, a 4D light-field image can be represented, by a collection of micro-lens images as previously described with reference to Figure 3. A 4D light-field image may also be represented, when recorded by a plenoptic camera by a set of sub-aperture images. Each sub-aperture image of composed of pixels of the same position selected from each microlens image. Furthermore, a 4D light-field image may be represented by a set of epipolar images, which is not the case of the pixel beam.

Embodiments of the invention provide a representation of light-field data based on the notion of pixel beam. In this way the diversity in formats and light-field devices may be taken into account. Indeed, one drawback of ray based formats, is that the parametrization planes have to be sampled to reflect the pixel formats and sizes. Therefore, the sampling needs to be defined along other data in order to recover physical meaningful information.

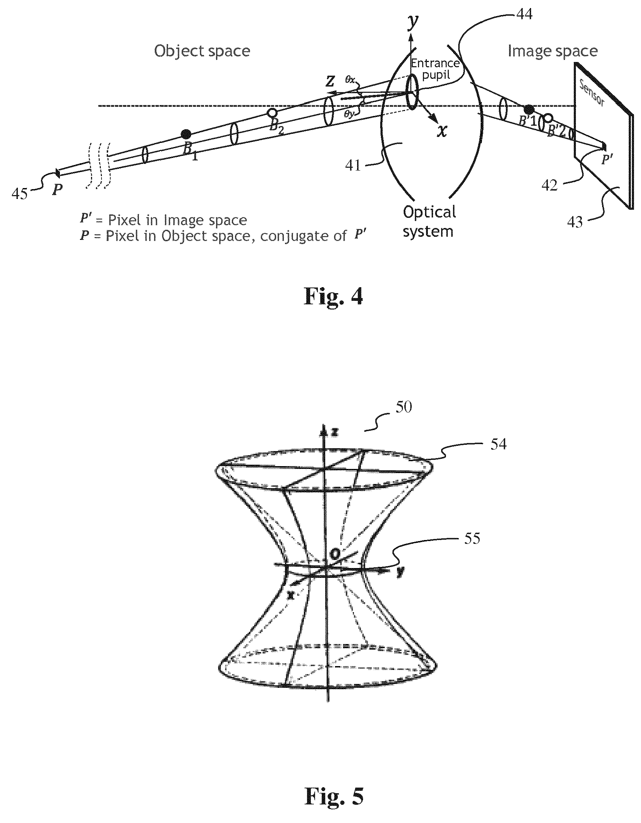

A pixel beam 40, as shown on **figure 4,** represents a volume occupied by a set of rays of light in an object space of an optical system 41 of a camera. The set of rays of light is sensed by a pixel 42 of a sensor 43 of the camera through a pupil 44 of said optical system 41. Contrary to rays, pixel beams 40 may be sample at will since they convey *per se* the *"etendue"* which corresponds to the preservation of the energy across sections of the physical light rays.

A pupil of an optical system is defined as the image of an aperture stop as seen through part of said optical system, i.e. the lenses of the camera which precedes said aperture stop. An aperture stop is an opening which limits the amount of light which passes through the optical system of the camera. For example, an adjustable diaphragm located inside a camera lens is the aperture stop for the lens. The amount of light admitted through the diaphragm is controlled by the diameter of the diaphragm opening which may adapted depending of the amount of light a user of the camera wishes to admit, or the depth of field the user wishes. For example, making the aperture smaller reduces the amount of light admitted through the diaphragm, but increases the depth of field. The apparent size of a stop may be larger or smaller than its physical size because of the refractive action of a lens. Formally, a pupil is the image of the aperture stop through the optical system of the camera.

A pixel beam 40 is defined as a pencil of rays of light that reaches a given pixel 42 when propagating through the optical system 41 via an entrance pupil 44. As light travels on straight lines in free space, the shape of such a pixel beam 40 can be defined by two sections, one being the conjugate 45 of the pixel 42, and the other being the entrance pupil 44. The pixel 42 is defined by its non-null surface and its sensitivity map.

Thus, a pixel beam may be represented by an hyperboloid of one sheet 50, as shown on **figure 5,** supported by two elements : the pupil 54 and the conjugate 55 of the pixel 42 in the object space of the camera.

A hyperboloid of one sheet is a ruled surface that can support the notion of pencil of rays of light and is compatible with the notion of *"étendue"* of physical light beams.

Since a hyperboloid of one sheet is a ruled surface, one family of straight lines, called generating rays, rotating around a revolution axis, called chief ray, of the hyperboloid, describe such a surface. The knowledge of parameters defining the chief ray and any generating ray belonging to the family of generating lines of the hyperboloid are sufficient to define a pixel beam 40, 50.

The general equation of a pixel beam 40, 50 is :

$$\frac{(x - x_0 - z.\tan\theta_x)^2}{a^2} + \frac{\left(y - y_0 - z.\tan\theta_y\right)^2}{b^2} - \frac{(z - z_0)^2}{c^2} = 1 \ (1)$$

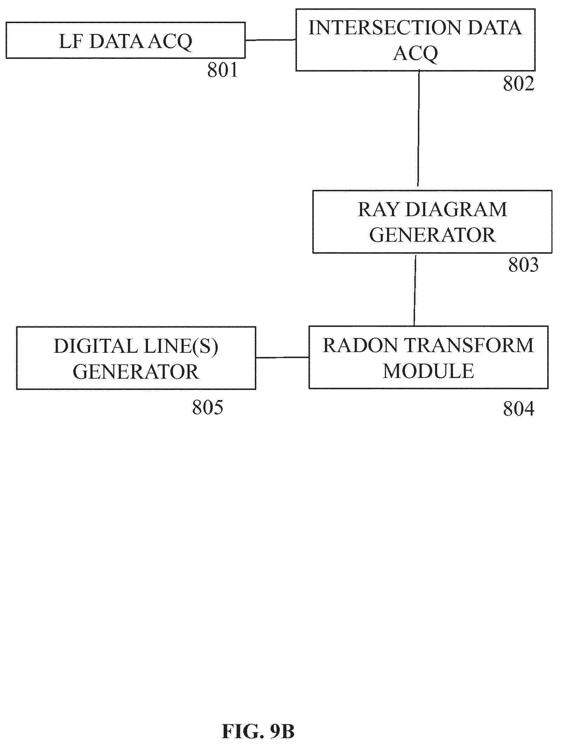

where $(x_0, y_0, z_0)$ are the coordinates of a centre of the waist of the pixel beam in a $(x, y, z)$ coordinates system, $a$, $b$, $c$ are homologous to the length of semi-axes along $Ox$, $Oy$, $Oz$ respectively, and $\theta_x$, $\theta_y$ define the chief ray directions relative to the entrance of the pupil 44 centre. They depend on the pixel 42 position on the sensor 43 and on the optical elements of the optical system 41. More precisely, the parameters $\theta_x$, $\theta_y$ represent shear angles defining a direction of the conjugate 45 of the pixel 42 from the centre of the pupil 44. However, such a representation of a pixel beam 40, 50 takes up large amounts of storage space since the classical file format for storing rays consists in storing a position and a direction in a 3D space. A solution for reducing the amount of storage space required to store a representation a pixel beam is described hereinafter in reference to figure 9B.

By nature, while chief rays will behave smoothly passing through the microlenses centres of the microlens array of the camera, generating rays suffer from stronger deviations on the borders of the microlenses. Thus the generating rays tend to hit the main lens of the camera at larger aperture angles. Aberrations like distortion will thus disturb the generating rays, while the chief rays are less affected by such aberrations. This disturbance of the generating rays makes it difficult to run the method described in reference to figure 9B since said method works with ordered collections of rays. To this end the inventors of the present invention propose a method for sorting the generating rays of a collection of pixel beams of a camera in order to feed the method according to figure XX with such a sorted collection of generating rays.

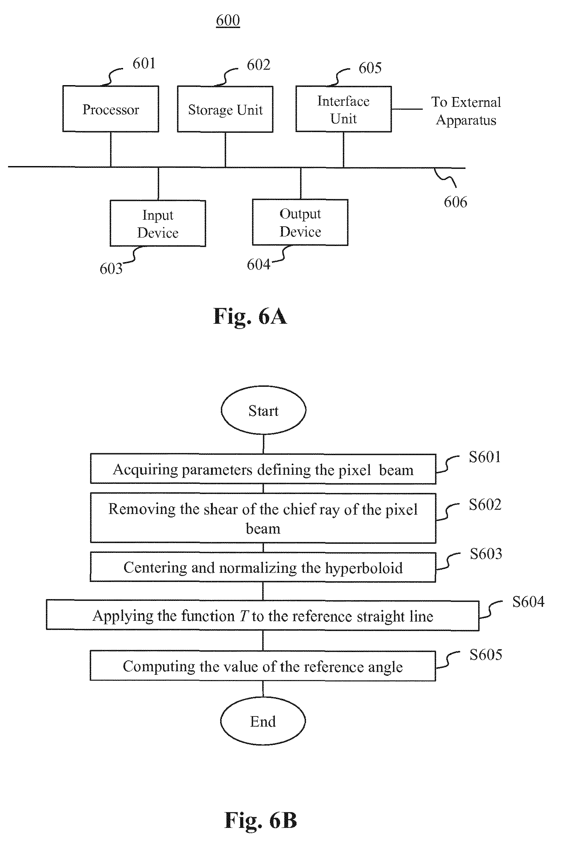

**Figure 6A** is a block diagram schematically illustrating the main modules of an apparatus for sorting the generating rays of a collection of pixel beams of a camera according to one or more embodiments of the invention.

The apparatus 600 comprises a processor 601, a storage unit 602, an input device 603, a display device 604, and an interface unit 605 which are connected by a bus 606. Of course, constituent elements of the computer apparatus 600 may be connected by a connection other than a bus connection.

The processor 601 controls operations of the apparatus 600. The storage unit 602 stores at least one program capable of sorting the generating rays of a collection of pixel beams of a camera to be executed by the processor 601, and various data, including parameters related to the optical system 21 of the optical acquisition system, parameters used by computations performed by the processor 601, intermediate data of computations performed by the processor 601, and so on. The processor 601 may be formed by any known and suitable hardware, or software, or a combination of hardware and software. For example, the processor 601 may be formed by dedicated hardware such as a processing circuit, or by a programmable processing unit such as a CPU (Central Processing Unit) that executes a program stored in a memory thereof.

The storage unit 602 may be formed by any suitable storage or means capable of storing the program, data, or the like in a computer-readable manner. Examples of the storage unit 602 include non-transitory computer-readable storage media such as semiconductor memory devices, and magnetic, optical, or magneto-optical recording media loaded into a read and write unit. The program causes the processor 601 to perform a process for computing parameters representing a volume occupied by a set of rays of light in an object space of an optical system and encoding these parameters with an image captured by the optical acquisition system according to an embodiment of the present disclosure as described hereinafter with reference to figure 9B.

The input device 603 may be formed by a keyboard, a pointing device such as a mouse, or the like for use by the user to input commands, to make user's selections of parameters used for generating a parametric representation of a volume occupied by a set of rays of light in an object space of an optical system. The output device 604 may be formed by a display device to display, for example, a Graphical User Interface (GUI), images generated according to an embodiment of the present disclosure. The input device 603 and the output device 604 may be formed integrally by a touchscreen panel, for example.

The interface unit 605 provides an interface between the apparatus 600 and an external apparatus. The interface unit 605 may be communicable with the external apparatus via cable or wireless communication. In an embodiment, the external apparatus may be a camera, or a portable device embedding such a camera like a mobile phone, a tablet, etc.

**Figure 6B** is a flow chart illustrating the steps of a method for sorting the generating rays of a collection of pixel beams of a camera according to one or more embodiments of the invention.

In a preliminary step S601, parameters $(x_o, y_o, z_o)$, $a$, $b$, $c$ and $\theta_x$, $\theta_y$ defining the different pixel beams associated to the pixels of the sensor of the camera are acquired either by calibrating the camera of by retrieving such parameters from a data file stored in a remote server or on a local storage unit such as the memory 290 of the camera or a flash disk connected to the camera. This acquisition or calibration may be executed by the processor 601 of the apparatus 600.

The computation of the values of the parameters $(x_0, y_0, z_0)$, $a$, $b$, $c$ and $\theta_x$, $\theta_y$ is realized, for example, by running a program capable of modelling a propagation of rays of light through the optical system of the camera. Such a program is for example an optical design program such as Zemax , ©, ASAP © or Code V ©. An optical design program is used to design and analyze optical systems. An optical design program models the propagation of rays of light through the optical system; and can model the effect of optical elements such as simple lenses, aspheric lenses, gradient index lenses, mirrors, and diffractive optical elements, etc. The optical design program may be executed by the processor 601 of the apparatus 600.

In a step S602 executed by the processor 601, the shear of the chief ray of a pixel beam is removed. Unshearing the chief ray consists in writing :

$$\begin{cases} \bar{x} = x - z.\tan\theta_x \\ \bar{y} = y - z.\tan\theta_y \end{cases}$$

which gives a hyperboloid of one sheet which chief ray is parallel to the Oz axis :

$$\frac{(\bar{x} - x_0)^2}{a^2} + \frac{(\bar{y} - y_0)^2}{b^2} - \frac{(z - z_0)^2}{c^2} = 1 \ (2)$$

where $(\bar{x}, \bar{y}, z)$ are the coordinates of a point belonging to the surface of the hyperboloid, and $(x_0, y_0, z_0)$ are the coordinates of the centre of the waist of the considered pixel beam.

Ina step S603, the processor 601 computes the centering of the hyperboloid on the point of coordinates $(x_0, y_0, z_0)$ and then compute the normalization of the hyperboloid which gives :

$$\begin{cases} X = \dfrac{(\bar{x} - x_0)}{a} \\ Y = \dfrac{(\bar{y} - y_0)}{b} \\ Z = \dfrac{(z - z_0)}{c} \end{cases} \ (3)$$

Thus equation (1) now reads

$$X^2 + Y^2 - Z^2 = 1 \ (4)$$

Unshearing then centering and normalizing a pixel beam reverts to use the function

$$T = \begin{cases} X = \dfrac{(x - z.tan\theta_x - x_0)}{a} \\[2mm] Y = \dfrac{(y - z.tan\theta_y - y_0)}{b} \\[2mm] Z = \dfrac{(z - z_0)}{c} \end{cases}$$ transforming $(x,y,z)$ coordinates into $(X, Y, Z)$ coordinates.

Since the central axis of the hyperboloid is the Oz axis, two points belonging to this axis have the following set of coordinates (0,0,0) and (0,0,1) in the *(XYZ)* coordinate system. This central axis of the hyperboloid, transformed back in the original coordinate system (*x, y, z*), is the chief ray $\rho_c$ of the pixel beam.

The hyperboloid defined by equation (4) has two families of generating rays :

- a first family of generating rays is given by the rotation around the OZ axis of a straight line joining a first point of coordinates (1, 0, 0) and a second point of coordinates (1, $\zeta$, $\zeta$) for any $\zeta \in \mathbb{R}^*$, for example $\zeta$ 1, and

- a second family of generating rays is given by the rotation around the OZ axis of a straight line joining the point of coordinates (1, 0, 0) and a third point of coordinates (1, -$\zeta$, $\zeta$) for any $\zeta \in \mathbb{R}^*$.

Any of these generating rays, transformed back in the original coordinate system, can be selected as $\rho_{G0}$ a generating ray of a pixel beam.

In the following description of the method according to an embodiment of the invention, two points $G_0$ which coordinantes are (1,0,0) and $I_0$ which coordiantes are (1, 1,1) in the *(XYZ)* coordinate system as defining the initial generating ray $\rho_{G0}$ in the *(XYZ)* coordinate system.

In a step S604, the processor 601 applies the function T as defined above to a reference straight line $\Delta$ in the object space of the camera. In an embodiment of the invention, the reference straight line $\Delta$ is an optical axis of a main lens of the camera. In another embodiment of the invention, the reference straight line $\Delta$ is a central axis of a lens-array of the camera, in a third embodiment the reference straight line $\Delta$ is a line with a direction forging an angle inferior or equal to $\dfrac{\pi}{4}$ with the optical axis of the main lens of the camera.

The reference straight line $\Delta$ is defined by two points of coordinate $P_{\Delta 0}(x_{\Delta 0},y_{\Delta 0},z_{\Delta 0})$ and $P_{\Delta 1}(x_{\Delta 1},y_{\Delta 1},z_{\Delta 1})$ in the (*x, y, z*) coordinates system.

Applying the function T to the coordinates of $P_{\Delta 0}$ and $P_{\Delta 1}$ gives in the *(XYZ)* coordinate system :

$$\begin{cases} P_{\Delta 0} & (X_{\Delta 0}, Y_{\Delta 0}, Z_{\Delta 0}) = T\big((x_{\Delta 0}, y_{\Delta 0}, z_{\Delta 0})\big) \\ P_{\Delta 1} & (X_{\Delta 1}, Y_{\Delta 1}, Z_{\Delta 1}) = T\big((x_{\Delta 1}, y_{\Delta 1}, z_{\Delta 1})\big) \end{cases}$$

As the chief ray $\rho_c$ of the pixel beam is the Oz axis in the *(XYZ)* coordinate system, a rotation of angle $\varphi$ around the chief ray $\rho_c$ is given by the rotation matrix:

$$R_\varphi = \begin{bmatrix} \cos\varphi & -\sin\varphi & 0 \\ \sin\varphi & \cos\varphi & 0 \\ 0 & 0 & 1 \end{bmatrix}.$$

Naming $\rho_{G\varphi}(G_\varphi, I_\varphi)$ the image of the generating ray $\rho_{G0}(G_0, I_0)$ by the rotation of angle $\varphi$ around the chief ray $\rho_c$ the coordinates of the points $G_\varphi$, and $I_\varphi$ are given by:

$$G_\varphi = R_\varphi G_0 = \begin{bmatrix} cos\,\varphi & -sin\,\varphi & 0 \\ sin\,\varphi & cos\,\varphi & 0 \\ 0 & 0 & 1 \end{bmatrix} \begin{bmatrix} 1 \\ 0 \\ 0 \end{bmatrix} = \begin{bmatrix} cos\,\varphi \\ sin\,\varphi \\ 0 \end{bmatrix}$$

$$I_\varphi = R_\varphi I_0 = \begin{bmatrix} cos\ \varphi & -sin\ \varphi & 0 \\ sin\ \varphi & cos\ \varphi & 0 \\ 0 & 0 & 1 \end{bmatrix} \begin{bmatrix} 1 \\ 1 \\ 1 \end{bmatrix} =$$

$$\begin{bmatrix} cos\ \varphi - sin\ \varphi \\ sin\ \varphi + cos\ \varphi \\ 1 \end{bmatrix}$$

During a step S605, the processor 601 computes the value of the rotation angle φ.

The value of the rotation angle φ is obtained when the generating ray $\rho_{G\varphi}$ crosses the reference straight line Δ, i.e the distance between the reference straight line Δ and the generating ray $\rho_{G\varphi}$ is equal to 0.

The distance between two skew lines with equations

$$\begin{cases} \vec{x} = \vec{x_1} + (\vec{x_2} - \vec{x_1}).s \\ \vec{y} = \vec{x_3} + (\vec{x_4} - \vec{x_3}).t \end{cases}$$

is given by (Gellert *et al.* 1989, p. 538).

$$D = \frac{|(\vec{x_3} - \vec{x_1}).[(\vec{x_2} - \vec{x_1}) \times (\vec{x_4} - \vec{x_3})]|}{|(\vec{x_2} - \vec{x_1}) \times (\vec{x_4} - \vec{x_3})|}$$

This can be written in the concise form :

$$D = \frac{|\vec{c}.(\vec{a} \times \vec{b})|}{|\vec{a} \times \vec{b}|} \qquad \text{by defining} \qquad \begin{pmatrix} \vec{a} = \vec{x_2} - \vec{x_1} \\ \vec{b} = \vec{x_4} - \vec{x_3} \\ \vec{c} = \vec{x_3} - \vec{x_1} \end{pmatrix}$$

In the current case, for $\begin{cases} \vec{x} = \vec{x_1} + (\vec{x_2} - \vec{x_1}).s \\ \vec{x} = \vec{x_3} + (\vec{x_4} - \vec{x_3}).t \end{cases}$ $x_1 = P_{\Delta 0}$ and $x_2 = P_{\Delta 1}$, and $x_3 = G_\varphi$ and $x_4 = I_\varphi$

A distance between two straight lines being equals to zero reverts to compute

$$D = 0 \Leftrightarrow \vec{c}.(\vec{a} \times \vec{b}) = 0 \Leftrightarrow det(\vec{a}\ \vec{b}\ \vec{c}) = 0 \Leftrightarrow \begin{vmatrix} a_1 & a_2 & a_3 \\ b_1 & b_2 & b_3 \\ c_1 & c_2 & c_3 \end{vmatrix} = 0$$

In the case of the reference straight line Δ and the generating ray $\rho_{G\varphi}$ :

$$\begin{pmatrix} \vec{a} = \vec{x_2} - \vec{x_1} = \overrightarrow{P_{\Delta 0}P_{\Delta 1}} = [X_{\Delta 1} - X_{\Delta 0} \quad Y_{\Delta 1} - Y_{\Delta 0} \quad Z_{\Delta 1} - Z_{\Delta 0}]^T \\ \vec{b} = \vec{x_4} - \vec{x_3} = \overrightarrow{G_\varphi I_\varphi} = [-sin\ \varphi \quad cos\ \varphi \quad 1]^T \\ \vec{c} = \vec{x_3} - \vec{x_1} = \overrightarrow{P_{\Delta 0}G_\varphi} = [cos\ \varphi - X_{\Delta 0} \quad sin\ \varphi - Y_{\Delta 0} \quad -Z_{\Delta 0}]^T \end{pmatrix}$$

$$D = 0 \Leftrightarrow \begin{vmatrix} X_{\Delta 1} - X_{\Delta 0} & Y_{\Delta 1} - Y_{\Delta 0} & Z_{\Delta 1} - Z_{\Delta 0} \\ -sin\,\varphi & cos\,\varphi & 1 \\ cos\,\varphi - X_{\Delta 0} & sin\,\varphi - Y_{\Delta 0} & -Z_{\Delta 0} \end{vmatrix} = 0$$

$$\Leftrightarrow \begin{vmatrix} dX_{\Delta} & dY_{\Delta} & dZ_{\Delta} \\ -sin\,\varphi & cos\,\varphi & 1 \\ cos\,\varphi - X_{\Delta 0} & sin\,\varphi - Y_{\Delta 0} & -Z_{\Delta 0} \end{vmatrix} = 0$$

$$\begin{vmatrix} a_1 & a_2 & a_3 \\ b_1 & b_2 & b_3 \\ c_1 & c_2 & c_3 \end{vmatrix} = a_1 b_2 c_3 - a_1 b_3 c_2 - a_2 b_1 c_3 + a_2 b_3 c_1 + a_3 b_1 c_2 - a_3 b_2 c_1$$

$$D = -Z_{\Delta 0}.\cos\varphi.\,dX_{\Delta} - (sin\,\varphi - Y_{\Delta 0}).\,dX_{\Delta} - Z_{\Delta 0}.\sin\varphi.\,dY_{\Delta}$$
$$+ (cos\,\varphi - X_{\Delta 0}).\,dY_{\Delta} - (sin\,\varphi - Y_{\Delta 0}).\sin\varphi.\,dZ_{\Delta}$$
$$- (cos\,\varphi - X_{\Delta 0}).\cos\varphi.\,dZ_{\Delta}$$

$$D = cos\,\varphi.(dY_{\Delta} - Z_{\Delta 0}.dX_{\Delta} + X_{\Delta 0}.dZ_{\Delta}) - sin\,\varphi.(dX_{\Delta} + Z_{\Delta 0}.dY_{\Delta} + Y_{\Delta 0}.dZ_{\Delta})$$
$$+ Y_{\Delta 0}.dX_{\Delta} - X_{\Delta 0}.dY_{\Delta} - sin^2\,\varphi.dZ_{\Delta} - cos^2\,\varphi.dZ_{\Delta}$$

$$D = cos\,\varphi.(-Z_{\Delta 0}.dX_{\Delta} + dY_{\Delta} + X_{\Delta 0}.dZ_{\Delta}) - sin\,\varphi.(dX_{\Delta} + Z_{\Delta 0}.dY_{\Delta} + Y_{\Delta 0}.dZ_{\Delta})$$
$$+ (Y_{\Delta 0}.dX_{\Delta} - X_{\Delta 0}.dY_{\Delta} - dZ_{\Delta})$$

Writing

$$D = A.\cos\varphi + B.\sin\varphi - C \text{ with: } \begin{cases} A = (-Z_{\Delta 0}.dX_{\Delta} + dY_{\Delta} + X_{\Delta 0}.dZ_{\Delta}) \\ B = -(dX_{\Delta} + Z_{\Delta 0}.dY_{\Delta} + Y_{\Delta 0}.dZ_{\Delta}) \\ C = -(Y_{\Delta 0}.dX_{\Delta} - X_{\Delta 0}.dY_{\Delta} - dZ_{\Delta}) \end{cases}$$

Two solutions for $\varphi$ giving $D = 0$ can be found by:

$$A + B.\tan\varphi = \frac{C}{cos\,\varphi} \Leftrightarrow (A + B.\tan\varphi)^2 = \frac{C^2}{cos^2\,\varphi}$$

$$\Leftrightarrow A^2 + 2.A.B.\tan\varphi + B^2.\tan^2\varphi = C^2(1 + tan^2\,\varphi)$$

$$\Leftrightarrow (B^2 - C^2).\tan^2\varphi + 2.A.B.\tan\varphi + (A^2 - C^2) = 0$$

Discriminant:

$$\Lambda = 4.A^2.B^2 - 4.(B^2 - C^2).(A^2 - C^2) = 4.(A^2 + B^2 - C^2).C^2$$

This leads to two solutions:

$$tan\,\varphi^{\pm} = \frac{-2.A.B \pm \sqrt{\Lambda}}{2.(B^2 - C^2)} = \frac{-A.B \pm |C|.\sqrt{A^2 + B^2 - C^2}}{B^2 - C^2}$$

Thus, two angles $\varphi^{+}$ and $\varphi^{-}$ are identified for the generating ray $\rho_{G\varphi}$ to cross the reference straight line $\Delta$.

Since there are two families of generating rays for a same hyperboloid, four different rays generating the pixel beam cross the reference straight line $\Delta$, two for each of the two families of generating rays. One generating ray is chosen among those four generating rays crossing the reference straight line. Then the selected generating ray is transformed back in the original coordinate system in a step S606.

This method is run on the different pixel beams of the camera. Thus, two collections of rays are obtained : a first collection of rays comprising the chief rays of the pixel beams of the camera and a second collection of rays comprising for the different pixel beams of the camera the generating rays crossing the reference straight line. Those two collections of rays are used in the method describe hereafter in order to provide a compact format for representing the pixel beams.

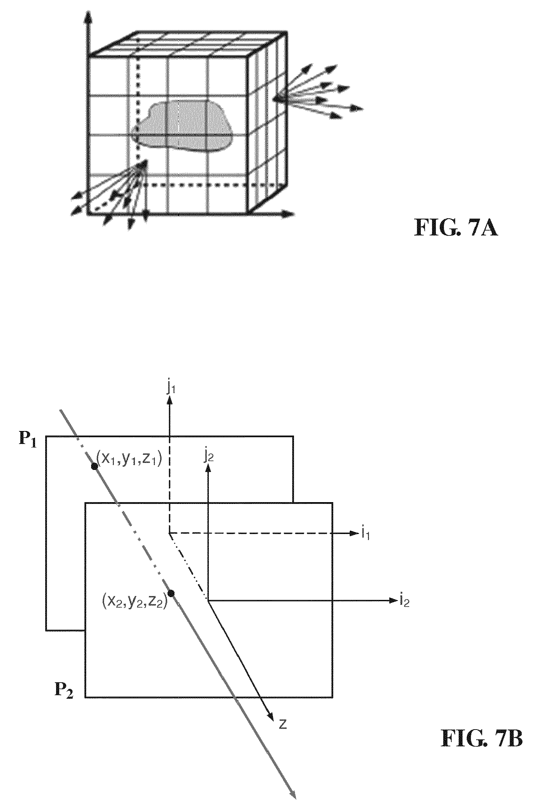

In order to propose a file format for storing rays which needs less storage space, a method for parametrizing the four dimensions of light-field radiance may be with reference to the cube illustrated in **Figure 7A.** All six faces of the cube may be used to parameterize the light-tield. In order to parameterize direction, a second set of planes parallel to the cube faces, may be added. In this way the light-field may be defined with respect to six pairs of planes with normals along the axis directions as:

$$\vec{i}, -\vec{i}, \vec{j}, -\vec{j}, \vec{k}, -\vec{k}$$

**Figure 7B** illustrates a light-field ray, such as a chief ray or a generating ray defining a pixel beam, passing through two reference planes P1 and P2 used for parameterization positioned parallel to one another and located at known depths $z_1$ and $z_2$ respectively. The light-field ray intersects the first reference plane $P_1$ at depth $z_1$ at intersection point $(x_1, y_1)$ and intersects the second reference plane $P_2$ at depth $z_2$ at intersection point $(x_2, y_2)$. In this way the light-field ray may be identified by four coordinates $(x_1, y_1, x_2, y_2)$. The light-field can thus be parameterized by a pair of reference planes for parameterization $P_1$, $P_2$ also referred herein as parametrization planes, with each light-field ray being represented as a point $(x_1, y_2, x_2, x_2) \in R^4$ in 4D ray space. Thus this is done for each chief ray and each generating ray of a collection of pixel beams of a camera.

For example an origin of the reference co-ordinate system may be placed at the center of a plane $P_1$ generated by the basis vectors of the coordinate axis system $(\vec{i_1}, \vec{j_1})$. The $\vec{k}$ axis is normal to the generated plane $P_1$ and the second plane $P_2$ can be placed for the sake of simplicity at a distance $z = \Delta$ from plane $P_1$ along the $\vec{k}$ axis. In order to take into account the six different directions of propagation the entire light-field may be characterized by six pairs of such planes. A pair of planes, often referred to as a light slab characterizes the light-field interacting with the sensor or sensor array of the light-field camera along a direction of propagation.

The position of a reference plane for parameterization can be given as:

$\vec{x_0} = d\vec{n}$ where $\vec{n}$ is the normal and $d$ is an offset from the origin of the 3D coordinate system along the direction of the normal.

A Cartesian equation of a reference plane for parameterization can be given as:

$$\vec{n}(\vec{x} - \vec{x_0}) = 0$$

If a light-field ray has a known position:

$\vec{x_i}(x_i, y_i, z_i)$ and a normalized propagation vector:

$\vec{u}(u_1, u_2, u_3)$ the general parametric equation of a ray in 3D may be given as :

$$\vec{x} = t\vec{u} + \vec{x_i}$$

The co-ordinates of the intersection $\vec{x1}$ between the light-field ray and a reference plane are given as:

$$\vec{x_1} = \vec{x_i} + \vec{u}\frac{\vec{n}(\vec{x_0} - \vec{x_i})}{\vec{u}\vec{n}}$$

$$(A)$$

There is no intersection between the light-field rays and the reference parameterization if the following condition is not satisfied:

$$(\vec{x_1} - \vec{x_0})\vec{u} > 0$$

Due to the perpendicularity with one of the axes of the system of the pair of reference planes used to parameterize the light-field, one of the components of the ray intersection is always constant for each plane. Hence if there is an intersection of a light-field ray $\vec{x1}$ with the first reference plane, and the intersection $\vec{x2}$ of the said light-field with the second reference plane, four coordinates vary and equation A can be used to calculate the four parameters of a light-field ray. These four parameters can be used to build up a 4D ray diagram of the light-field.

Assuming parameterization of the light-field with reference to two parameterization reference planes, data representing the light-field may be obtained as follows. If a reference system is set as pictured in **Figure 8** a first parametrization plane P1 is perpendicular to z axis at z = z1, a second parametrization plane P2 is arranged perpendicular to the z axis at z = z2 and a ray whose light-field parameters are L(x1; y1; x2; y2) are to be rendered at a location z = z3 where a photosensor array of a light-field camera is positioned. From equation (A) :

$$\vec{x_3} = \vec{x_2} + \vec{u}\frac{\vec{n}(z_3\vec{n} - \vec{x_2})}{\vec{u}\vec{n}}$$

$$\vec{x_3} = \vec{x_1} + \vec{u}\frac{\vec{n}(z_3\vec{n} - \vec{x_1})}{\vec{u}\vec{n}}$$

with

$$\vec{u} = \frac{\vec{x_2} - \vec{x_1}}{\|\vec{x_2} - \vec{x_1}\|} = (u_x, u_y, u_z)$$

$$\vec{n}(0, 0, 1)$$

Developing the above expression gives:

$$x_3 = x_2 + \frac{u_x}{u_z}(z_3 - z_2)$$

$$y_3 = y_2 + \frac{u_y}{u_z}(z_3 - z_2)$$

$$z_3 = z_3$$

$$x_3 = x_1 + \frac{u_x}{u_z}(z_3 - z_1)$$

$$y_3 = y_1 + \frac{u_y}{u_z}(z_3 - z_1)$$

$$z_3 = z_3$$

Both sets of equation should deliver the same point $\vec{x3}$ as the rendered light-field ray at the new location. By replacing $u_x; u_y; u_z$ with their corresponding expression as functions of $\vec{x1}$ and $\vec{x2}$, if the second set of equation from the previous block is used and x3 and y3 are added together:

$$x_1 + \frac{z_3 - z_1}{z_2 - z_1}(x_2 - x_1) + y_1 + \frac{z_3 - z_1}{z_2 - z_1}(y_2 - y_1) = x_3 + y_3$$

Leading to the expression:

$$(z_2 - z_3)(x_1 + y_1) + (z_3 - z_1)(x_2 + y_2) = (z_2 - z_1)(x_3 + y_3)$$

(B)

Co-ordinates with a subscript 3 relate to a known point $(x_3, y_3, z_3)$ where the light-field is rendered. All depth co-ordinates $z_i$ are known. The parameterisation planes are in the direction of propagation or rendering. The light-fielddata parameters L are $(x_1, y_1, x_2, y_2)$

The light-field rays that form an image at point $(x_3, y_3, z_3)$ are linked by expression (B) which defines a hyper plane in $\mathbb{R}^4$.

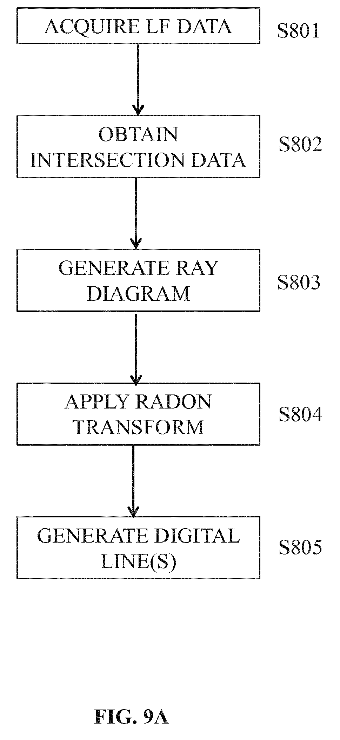

This signifies that if images are to be rendered from a two-plane parametrized light-field, only the rays in the vicinity of hyperplanes need to be rendered, there is no need to trace them. **Figure 9A** is a flow chart illustrating the steps of a method for generating data representative of a light-field according to one or more embodiments of the invention. **Figure 9B** is a block diagram schematically illustrating the main modules of a system for generating data representative of a light-field according to one or more embodiments of the invention.

In a preliminary step S801 of the method parameters defining the chief rays and the generating rays of the different pixel beams associated to the pixels of the sensor of the camera are acquired. These parameters are obtained as a result of the method for sorting the generating rays described above.

Such parameters are the coordinates of the chief rays and of a generating ray crossing the reference straight line of the different pixel

In another preliminary step S802 raw light-field data is acquired by a light-field camera 801. The raw light-field data may for example be in the form of micro images as described with reference to Figure 3. The light-field camera may be a light-field camera device such as shown in Figures 1A or 1B and 2A and 2B.

In step S803 the acquired light-field data is processed by ray parameter module 802 to provide intersection data $(x_1, y_1, x_2, y_2)$ defining intersection of captured light-field rays, which correspond to the chief rays and the generating rays crossing the reference straight line of pixel beams 40, 50, with a pair of reference planes for parameterization $P_1$, $P_2$ at respective depths $z_1, z_2$.

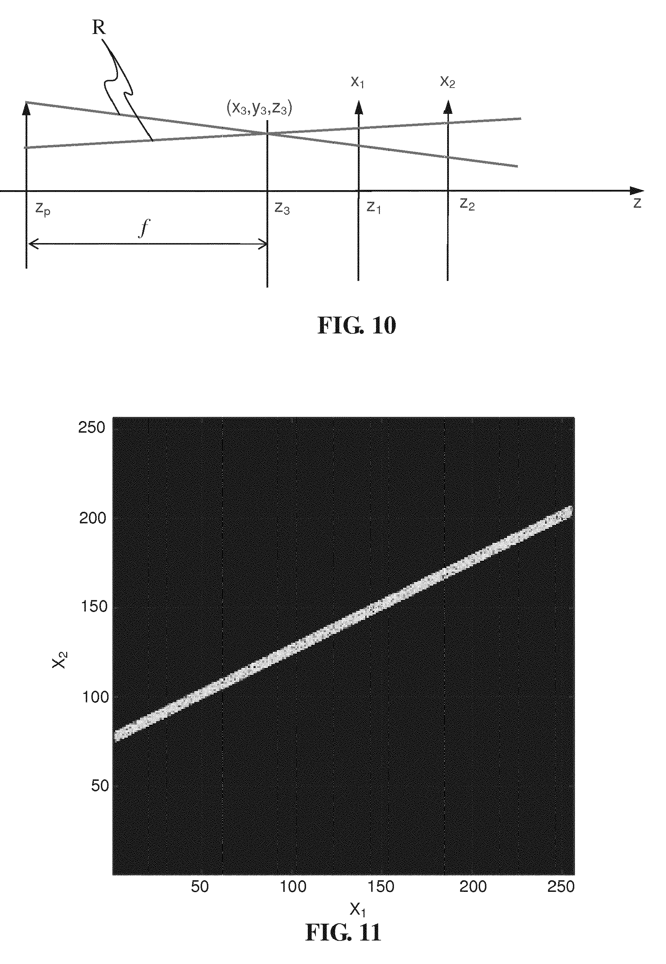

From calibration of the camera the following parameters can be determined: the centre of projection $(x_3, y_3, z_3)$ the orientation of the optical axis of the camera and the distance f from the pinhole of the camera to the plane of the photosensor. The light-field camera parameters are illustrated in **Figure 10.** The photosensor plane is located at depth $z_p$. The pixel output of the photosensor is converted into geometrical representation of light-field rays. A light-slab comprising the two reference planes $P_1$ and $P_2$ is located at depths $z_1$ and $z_2$ respectively, beyond $z_3$ at the other side of the centre of projection of the camera to the photosensor. By applying a triangle principle to the light rays, pixel coordinates $(x_p, y_p, z_p)$ recording the light projected from the array of microlenses can be mapped to ray parameters i.e. reference plane intersection points $(x_1, y_1, x_2, y_2)$ by applying the following expression:

$$x_1 = \frac{z_3 - z_1}{z_3 - z_p} \, x_p + \frac{z_1 - z_p}{z_3 - z_p} \, x_3$$

$$y_1 = \frac{z_3 - z_1}{z_3 - z_p} \, y_p + \frac{z_1 - z_p}{z_3 - z_p} \, y_3$$

$$x_2 = \frac{z_3 - z_2}{z_3 - z_p} \, x_p + \frac{z_1 - z_p}{z_3 - z_p} \, x_3$$

$$y_2 = \frac{z_3 - z_2}{z_3 - z_p} \, y_p + \frac{z_1 - z_p}{z_3 - z_p} \, y_3$$

The above calculation may be extended to multiple cameras with different pairs of triplets $(x_y, x_3, y_3 \, z_3)$:

In the case of a plenoptic camera, a camera model with an aperture is used and a light-field ray is described in the phase space as having an origin $(x_p, y_p, z_p)$ and a direction $(x'_3, y'_3, 1)$. Its propagation unto the plane $(x_3, y_3)$ at depth $z_3$ can be described as a matrix transform. The lens will act as an ABCD matrix to refract the ray and another ABCD propagation matrix will bring the ray onto the light-slab reference planes $P_1$ and $P_2$.

From this step intersection data $(x_1, y_1, x_2, y_2)$ geometrically defining intersection of the chief rays and the generating ray crossing the reference straight line with reference planes $P_1$, $P_2$ is obtained.

In step S804 2D ray a diagram graphically representing the intersection data $(x_1, y_1, x_2, y_2)$ is obtained by ray diagram generator module 803.

**Figure 11** is a 2D ray diagram graphically representing intersection data $(x_1, x_2)$ of light-field rays captured by a camera at location $x_3$= 2 and depth $z_3$ =2 with an aperture $|A| < 0.5$. The data lines of the ray diagram used to parameterise are sampled by 256 cells providing an image of 256x256 pixels.

If the ray diagram illustrated in Figure 11 is interpreted as a matrix, it can be seen that it is sparsely populated. If the rays were to be saved individually in a file instead of the 4D phase space matrix, this would require saving for each ray, at least 2 bytes (int16) for each position $x_i$ or $x_3$ plus 3 bytes for the color, i.e. 7 bytes per ray for a 2D slice light-field, and 11 bytes per ray for its full 4D representation. Even then, the rays would be stored randomly in the file which might be unsuitable for applications that need to manipulate the representation. The inventors of the present invention have determined how to extract only the representative data from the ray diagram matrix and to store the data in a file in a structured manner.

Since the light-field rays are mapped along data lines of the 2D ray diagram, it is more efficient to store parameters defining the data line rather than the line values themselves. Parameters defining the data line such as, for example, a slope defining parameter $s$ and an axis intercept $d$ may be stored with the set of light-field rays belonging to that data line.

This could require for example as little as 2 bytes for slope parameter s, 2 bytes for intercept parameter d and then only 3 bytes per ray, Moreover, the rays may be ordered along lines in the file. In order to set lines through matrix cells so called digital lines are generated which approximate the ray lines with minimum error.

To locate the data lines and to obtain slope parameter s and intercept parameter d step S805 a Radon transform is performed by line detection module 804 on the ray diagram generated in step S804.

From the obtained slope parameter $s$ and intercept parameter $d$ a representative digital line is generated by digital line generation module 805 in step S806. In this step digital lines are generated by approximating an analytical line to its nearest grid point, for example by applying Bresenham's algorithm. Indeed Bresenham's algorithm provides a way to provide a digital line with minimal operation. Other methods may apply a fast discrete Radon transform calculation. An example of Bresenham application is one adapted from the following reference: http://www.cs.helsinki.fi/group/goa/mallinnus/lines/bresenh.html.

The digital format defines the data line by two points of a grid $(0,d)$ and $(N-1, s)$ d being the intersection corresponding to the value of $x_2$ when $x_1 = 0$ and s being the slope parameter corresponding to the value of $x_2$ when $x_1 = N-1$. From the digital format generated the slope $a$ of each individual line may be expressed as a function of $d$, $N$ and $s$, as:

$$a = \frac{s-d}{N-1}$$

where:

$$s \in \{0, 1, \ldots N-1\} \text{ and } d \in \{0, 1, \ldots N-1\}$$

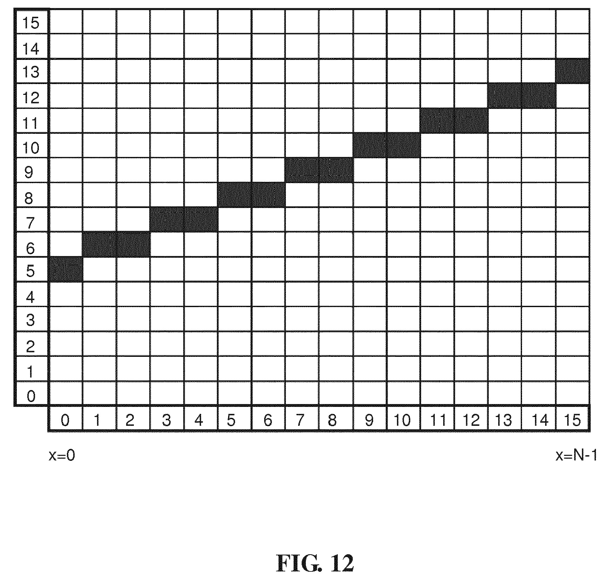

**Figure 12** illustrates an example of a digital line generated by application of Bresenham's algorithm.

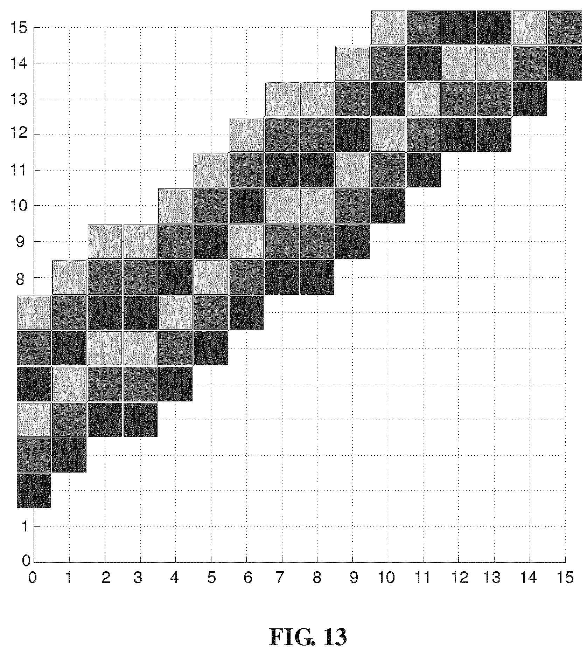

**Figure 13** illustrates a group of digital lines having the same slope $a$ (or $s$ - $d$) but different intercepts $d$, the group of data lines being contiguous. The group of data lines is referred to herein as a bundle of lines and corresponds to a beam resulting from the camera not being ideally a pinhole camera. Each line addresses different pixels. In other words, one pixel belongs only to a unique line of a bundle with the same slope but different intercepts. The upper and lower boundaries of the axis intersections $d$ are given as $d_{max}$ and $d_{min}$ respectively.

Ray data parameterized by a sampled pair of lines (in 2D) and belonging to one camera, belong to a family of digital lines (beam) in the phase space used for representing the data. The header of the beam can simply contain the slope $a$ and the thickness of the beam defined by the upper and lower boundaries of the axis intersections $d_{max}$ - $d_{min}$. The ray values will be stored as RGB colors along digital lines whose header can be d and s. Void cells of the ray diagram in the sampled space do not need to be stored. Coordinates x1; x2 of the rays can be deduced from the parameters d, s and from the position of the cell along the digital line.

Parameters to be estimated from the light-field or from camera's geometry are the slope $a$ the lower and upper bounds of the digital line intercepts ($d_{min}$, $d_{max}$) ,and the digital line parameters ($d_i$, $s_i$). The discrete Radon transform has already been discussed as a tool to measure the support location of the light-field in the ray diagram.

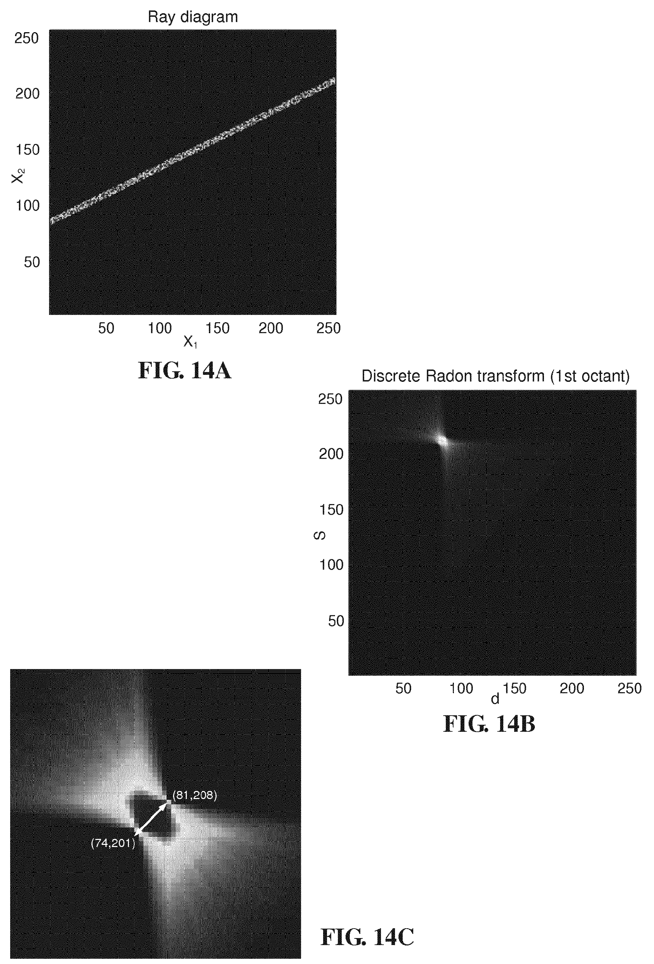

**Figure 14B** shows the discrete Radon transform in the digital line parameter space ($d$, $s$) of the datalines **of Figure 14A. Figure 14C** is a zoom of the region of interest comprised in Figure 14B. The beam of digital lines is located by the search for the maximum value parameters. There could be some offset between the geometrical center of symmetry of the DRT and the actual position of the maximum due to image content so that later on, an algorithm is used to pin-point the center of symmetry instead of the maximum. Then, the waist of the beam transform as shown on Figure 13C is easy to find to give the values ($d_{min}$, $d_{max}$). Point ($d_{min}$ = 74, $s$ = 201) is the lower envelope of the beam of digital lines from Figure 12A, and point ($d_{max}$ = 81, $s$ = 208) is the upper envelope of the beam of digital lines.

The equations of two orthogonal 2D sliced spaces from equation B is given as.

$$(z_2 - z_3)(x_1 + y_1) + (z_3 - z_1)(x_2 + y_2) = (z_2 - z_1)(x_3 + y_3) \quad (C)$$

If a 2D slice for $x_i$ coordinates is taken, the equation of the beam of lines where ray data through an aperture of size A at ($x_3$, $y_3$, $z_3$) will map is given as:

$$x_2 = \frac{(z_3 - z_2)}{(z_3 - z_1)} x_1 + \frac{(z_2 - z_1)}{(z_3 - z_1)} (x_3 \pm A) = mx_1 + \left(d_{max_x} - d_{min_x}\right)$$

$$(D)$$

Similarly, if a 2D slice is taken for $y_i$ coordinates:

$$y_2 = \frac{(z_3 - z_2)}{(z_3 - z_1)} y_1 + \frac{(z_2 - z_1)}{(z_3 - z_1)} (y_3 \pm A) = my_1 + \left(d_{max_y} - d_{min_y}\right)$$

$$(E)$$

As previously described, the values of m and $d_{max_x}$, $d_{min_x}$, $d_{max_y}$, $d_{min_y}$ may be evaluated in the discrete domain. To localize the characteristics of a light-field as defined by the format discussed previously, there is no need to perform a 4D discrete Radon transform (DRT). If two orthogonal 2D DRT are obtained, measurements can be performed of the slope m of the hyper-plane and the beam width of the digital hyper-planes where all data concentrates in the 4D ray-diagram.

This simpler procedure of location assumes a circular entrance pupil A so that $d_{max_x}$, $d_{min_x}$, $d_{max_y}$, $d_{min_y}$ will encompass all hyper-planes intercepts, some values written in the format will contain no values.

It would be interesting to obtain a format for the 4D case which is similar to what was proposed for the 2D case. To do so, it would be interesting to associate the 2D lines found on the $\Pi(x_1, x_2)$, plane with the lines found on the $\Pi(y_1, y_2)$ place, i.e., the lines that are the results of the intersection of the corresponding hyper plane with the two orthogonal slices of $\Pi(x_1, x_2)$, and $\Pi(y_1, y_2)$, From expressions D and E, it is known that the corresponding lines have the same slope $m$. This is the first parameter that associates each line in $\Pi(x_1, x_2)$ to a line in $\Pi(y_1, y_2)$, for a camera at a certain depth. If there are multiple cameras at the same depth (i.e., the case of Fig. 14A), there are three lines in $\Pi(x_1, x_2)$, and three lines in $\Pi(y_1, y_2)$, with the same estimated slope of $m$. The correspondences in the line offsets between the lines in these two planes are then determined. To do this, the formulation of the lines in expressions D and E are exploited.

In particular, denoting $k = \dfrac{z_2 - z_1}{z_3 - z_1}$, the offsets are as follows:

$$\begin{cases} kx_3 + kA = d_{max_x} \\ kx_3 - kA = d_{min_x} \end{cases} \quad \text{(F)}$$

and

$$\begin{cases} ky_3 + kA = d_{max_y} \\ ky_3 - kA = d_{min_y} \end{cases} \quad \text{(G)}$$

The sets of the equations may be solved for $k$, $x_3$ and $y_3$. Note that $(x_3, y_3, z_3)$ correspond to the coordinates of the camera, or in other words the voxel where the corresponding bundle of light is focused into a circle of the radius A. We have supposed that the aperture on the plane positioned at $z_3$ is circular, so that $d_{max_x} - d_{min_x} = d_{max_y} - d_{min_y} = 2kA$, and by solving the previous sets of equations:

$$k = \frac{d_{max_x} - d_{min_x}}{2A} \quad \text{(G)}$$

$$x_3 = A \frac{d_{max_x} + d_{min_x}}{d_{max_x} - d_{min_x}} \quad \text{(H)}$$

$$y_3 = A \frac{d_{max_y} + d_{min_y}}{d_{max_y} - d_{min_y}} \quad \text{(I)}$$

$$z_3 = \frac{z_2 + (k-1)z_1}{k} \quad \text{(J)}$$

The digital lines may be scanned as before on $\Pi(x_1, x_2)$ using the Bresenham digital lines; For each individual $(x_1, x_2)$, value, the corresponding $(y_1, y_2)$ values captured in the light-field are stored. To find such values, expression C is exploited. All the following are either known or estimated from expressions F and G x3; y3; z3; z1; z2

Moving on each line in $\Pi(x_1, x_2)$, for each $(x_1^q, x_2^q)$, the following relationship in $(y_1, y_2)$ is obtained:

$$y_2 = \frac{z_3 - z_2}{z_3 - z_1} y_1 + \frac{z_3 - z_2}{z_3 - z_1} x_1^q + \frac{z_2 - z_1}{z_3 - z_1}\left(x_3 + y_3\right) - x_2^q$$

or,

$$y_2 = my_1 + mx_1^q + k(x_3 + y_3{}^*) - x_2^q = my_1 + d_{off}(x_1^q, x_2^q, x_3, y_3{}^*)$$

For each point in $\Pi(x_1, x_2)$, a collection of lines in $\Pi(y_1, y_2)$ is saved. $d_{off}$ corresponds to the offset of the lines scanned and saved for $(x_1^q, x_2^q)$. It is noted that:

$$d_{off}(x_1^q, x_2^q) = mx_1^q + k(x_3 + y_3{}^*) - x_2^q$$

With reference to Figure 12 each square is a $(x_1^q, x_2^q)$, point, and for each one of these points, there is a set ot Bresenham digital lines running out of the plane of the figure along a digital bundle defined by equation:

$$y_2 = my_1 + d_{off}\left(x_1^q, x_2^q, x_3, y_3{}^*\right) \quad (\mathrm{K})$$

perpendicular to the depicted datalines, but in a 4D space.

An exemplary data format for a bundle of data lines per camera is illustrated in Table 1.

| Tags | | | Data | | | |
|---|---|---|---|---|---|---|
| Light slab orientation 1 | | | one tag w from (-x,+x,-y,+y,-z,+z) | | | |
| Parametrization plane offset $w_2-w_1$ ($w_3$ is relative to $w_1$) (float) | | | $\Delta e$ | | | |
| Width in number of $u_1$ cells (integer) | min $u_1$ value (float) | max $u_1$ value (float) | N | $u_{1min}$ | $u_{1Max}$ | |
| Width in number of $u_2$ cells (integer) | min $u_2$ value (float) | max $u_2$ value (float) | M | $u_{2min}$ | $u_{2Max}$ | |
| Width in number of $v_1$ cells (integer) | min $v_1$ value (float) | max $v_1$ value (float) | P | $v_{1min}$ | $v_{1Max}$ | |
| Width in number of $v_2$ cells (integer) | min $v_2$ value (float) | max $v_2$ value (float) | Q | $v_{2min}$ | $v_{2Max}$ | |
| Number of cameras (integer) | | | n | | | |
| Aperture size for $cam_1$ | | | $A_1$ | | | |
| $Cam_1$ focus (3 floats) | | | $u3_1$ | $v3_1$ | $w3_1$ | |
| lowest $cam_1$ intercept in $(u_1,u_2)$ | $cam_1$ steepness | $cam_1$ number of digital lines in $u_1,u_2$ | $d_1$ | $m_1$ | $l^x_1$ | |
| | | $cam_1$ number of digital lines in $v_1,v_2$ | | | $l^y_1$ | |
| data line ($end_1=l^x_1{*}N{*}l^y_1{*}P){*}$ (3 bytes + 2floats) | | | $(RGB\ z_p\ a)_0$ | $(RGB\ z_p\ a)_1$ | ... | $(RGB\ z_p\ a)_n$ |
| ... | | | ... | ... | | |
| ... | | | ... | ... | ... | ... |
| Aperture size for $cam_n$ | | | $A_n$ | | | |
| $Cam_n$ focus (3 floats) | | | $u3_n$ | $v3_n$ | $w3_n$ | |
| lowest $cam_n$ intercept in $(u_1,u_2)$ | $cam_n$ steepness | $cam_n$ number of digital lines in $u_1,u_2$ | $d_n$ | $m_n$ | $l^x_n$ | |
| | | $cam_n$ number of digital lines in $v_1,v_2$ | | | $l^y_n$ | |
| data line ($end_n=l^x_n{*}N{*}l^y_n{*}P){*}$ (3 bytes + 3floats) | | | $(RGB\ z_p\ a)_0$ | $(RGB\ z_p\ a)_1$ | ... | $(RGB\ z_p\ a)_n$ |

Table 1

Firstly general metadata of the 4D space is provided: including boundaries of the 4 axes $x_1$, $x_2$, $y_1$, $y_2$ and their corresponding sampling. The number of cameras (bundles) is also provided. For each camera $j$ the following parameters are saved:

the size of the aperture: $A_j$, which corresponds to the diameter of the pupil of a pixel beam,

the focus point of the camera: $cam_j$; focusPoint $=(u_3, u_3, w_3)$

lowest $d$ intercept in $(x1_x,2)= d_j$

steepness $= m_j$

number of digital lines in $(x_1, x_2) = l_j^x$

number of digital lines in $(y_1, y_2) = l_j^{xy}$

On each camera, for each $(x^q{}_1; x^q{}_2)$, scanning is started on $(y_1, y_2)$ with respect to expression (K) using the Bresenham digital lines, and the RGB values of each light-field rays are saved. In particular $y_3^* - A$ to $\mathbb{R}^4$ and the corresponding $d_{off}$ is calculated according to expression (K).

The same calculations are performed in the decoding step using the stored metadata. In particular, k is found using equation (H). Hence the format remains compact. There is no need to store four indexes for each ray in the system. It is noted that the sampling of the hyper-plane above is the sampling of the 4D ray-space and thus a single x1; y1; x2; y2 location is not missed. This is only one example of a systematic scanning of the 4D ray-space for saving all data in a very compact form. Other processes may of course be applied. The parametric form seems to be adapted to explore the hyper-plane because it permits an inter-leaved space exploration.

In the case of multiple cameras to work on data that contains several bundles of hyper-planes (several maxima in the Radon transform due to multiple cameras), a more complex algorithm may be used. As a pre-processing step, the parameters $(m, k)$ are found for all the peaks in the radon transform of $\Pi(x_1, x_2)$, and put in one set. The same is done for the peaks in $(y_1, y_2)$ and the parameters are put in another set. Now in each iteration of the greedy algorithm, the maximum peak intensity is found in the 2D radon transform of $(x_1, x_2)$ and the corresponding peak in $(y_1, y_2)$ is found by matching the previously found parameters $(m, k)$. After saving the data as mentioned in the last section, these peaks are cleaned from the radon transforms, and the next iteration is started, until nothing meaningful remains in the light-field

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

**Claims**

1. A computer implemented method for generating data representative of a volume in an object space of an optical acquisition system occupied by a set of rays of light that at least one pixel of a sensor of said optical acquisition system can sense through a pupil of said optical acquisition system, said volume being called a pixel beam, comprising:

   - computing a rotation angle of a first straight line describing a surface of a hyperboloid of one sheet representing the pixel beam, called first generating ray, around a second straight line being a revolution axis of the hyperboloid, said rotation transforming the first generating ray into a second generating ray crossing a reference straight line to provide data representative of the pixel beam.

2. The method according to claim 1 wherein the reference straight line is parallel to an optical axis of a main lens of the optical acquisition system.

3. The method according to claim 1 wherein the reference straight line is parallel to a central axis of a lens-array of the optical acquisition system.

4. The method according to any of the preceding claims wherein computing the rotation angle consists in :

- computing coordinates of a vector defining the second generating ray by multiplying a vector defining the first generating ray with a rotation matrix,
- the distance between the second generating ray and the reference straight line being equal to zero since said second generating ray and said reference straight line cross each other, computing the value of the rotation angle based on the points and vectors defining said second generating ray and said reference straight line.

5. The method according to claim 4 wherein providing data representative of the pixel beam further comprises :

- computing intersection data defining intersections of the second generating ray and the revolution axis with a plurality of given reference planes, said reference planes being parallel to one another and corresponding to different depths in the object space;
- obtaining ray diagram parameters defining the graphical representation of the intersection data in a 2D ray diagram, and
- associating said ray diagram parameters to provide data representative of the pixel beam.

6. The method according to claim 5 wherein the intersection data corresponding to the second generating ray and the revolution axis are graphically represented in the ray diagram as datalines and the ray diagram parameters include data representative of at least one of:

- the slope of a dataline; and
- an intersection of a dataline with an axis of the ray diagram.

7. The method according to claim 6 wherein the data representative of the pixel beam further comprises colour data representing the colour of the corresponding second generating ray and revolution axis.

8. An apparatus for generating data representative of a volume in an object space of an optical acquisition system occupied by a set of rays of light that at least one pixel of a sensor of said optical acquisition system can sense through a pupil of said optical acquisition system, said volume being called a pixel beam, said apparatus comprising a processor configured to :

- compute a rotation angle of a first straight line describing a surface of a hyperboloid of one sheet representing the pixel beam, called first generating ray, around a second straight line being a revolution axis of the hyperboloid, said rotation transforming the first generating ray into a second generating ray crossing a reference straight line to provide data representative of the pixel beam.

9. The apparatus according to claim 8 wherein the processor is configured to compute the rotation angle by :

- computing coordinates of a vector defining the second generating ray by multiplying a vector defining the first generating ray with a rotation matrix,
- the distance between the second generating ray and the reference straight line being equal to zero since said second generating ray and said reference straight line cross each other, computing the value of the rotation angle based on the vectors defining said second generating ray and said reference straight line.

10. The apparatus according to claim 9 wherein the processor is further configured to :

- compute intersection data defining intersections of the second generating ray and the revolution axis with a plurality of given reference planes, said reference planes being parallel to one another and corresponding to different depths in the object space;
- obtain ray diagram parameters defining the graphical representation of the intersection data in a 2D ray diagram, and
- associate said ray diagram parameters to provide data representative of the pixel beam.

11. A light field imaging device comprising :

- an array of micro lenses arranged in a regular lattice structure;
- a photosensor configured to capture light projected on the photosensor from the array of micro lenses, the photosensor comprising sets of pixels, each set of pixels being optically associated with a respective micro lens of the array of micro lenses; and
- a device for providing metadata in accordance with claim 8.

12. A device for rendering an image from light field data obtained in accordance with the method of any one of claims 1 to 7.

13. A data package for data representative of a volume in an object space of an optical acquisition system occupied by a set of rays of light that at least one pixel of a sensor of said optical acquisition system can sense through a pupil of said optical acquisition system, said volume being called a pixel beam, comprising a ray diagram parameters defining the graphical representation in a 2D ray diagram of intersection data of the light rays representative of the pixel beam, the intersection data defining intersections of the light field rays representative of the pixel beam with a plurality of given reference planes, said reference planes being parallel to one another and corresponding to different depths in the object space; colour data defining colours of the light field rays representative of the pixel beam.

14. A computer program product for a programmable apparatus, the computer program product comprising a sequence of instructions for implementing a method according to any one of claims 1 to 7 when loaded into and executed by the programmable apparatus.

101
103
103
102
104

100

**Fig. 1A (Prior Art)**

112
114

110

**Fig. 1B (Prior Art)**

**FIG. 2A**

CPU — 2040

2000 —

Controller — 2045

Memory

LF FORMAT — 2090

2050 —

2055 —

LF PROCESS

OS

2051 —

I/O

2052 —

**FIG.2B**

Object space

Image space

Entrance pupil

Sensor

Optical system

$P'$ = Pixel in Image space
$P$ = Pixel in Object space, conjugate of $P'$

**Fig. 4**

**Fig. 5**

600

601          602          605

| Processor | Storage Unit | Interface Unit |

To External
Apparatus

606

| Input Device | | Output Device |

603          604

## Fig. 6A

( Start )

Acquiring parameters defining the pixel beam  S601

Removing the shear of the chief ray of the pixel beam  S602

Centering and normalizing the hyperboloid  S603

Applying the function $T$ to the reference straight line  S604

Computing the value of the reference angle  S605

( End )

## Fig. 6B

FIG. 7A

FIG. 7B

MI

j

i

$(x_{i,j}, y_{i,j})$

**FIG. 3**

First parametrization plane    Second parametrization plane        Rendering plane

$y_1$                          $y_2$                              $y_3$

$x_1$                          $x_2$                              $x_3$

z

$z_1$                          $z_2$                              $z_3$

**FIG. 8**

ACQUIRE LF DATA — S801

↓

OBTAIN INTERSECTION DATA — S802

↓

GENERATE RAY DIAGRAM — S803

↓

APPLY RADON TRANSFORM — S804

↓

GENERATE DIGITAL LINE(S) — S805

**FIG. 9A**

```
┌─────────────────────┐        ┌─────────────────────┐
│                     │        │  INTERSECTION DATA  │
│    LF DATA ACQ      │────────│        ACQ          │
│                     │        │                     │
└─────────────────────┘        └─────────────────────┘
                801                              802

                               ┌─────────────────────┐
                               │    RAY DIAGRAM      │
                               │    GENERATOR        │
                               │                     │
                               └─────────────────────┘
                                                 803

┌─────────────────────┐        ┌─────────────────────┐
│  DIGITAL LINE(S)    │        │  RADON TRANSFORM    │
│    GENERATOR        │────────│      MODULE         │
│                     │        │                     │
└─────────────────────┘        └─────────────────────┘
         805                                     804
```

**FIG. 9B**

**FIG. 10**

**FIG. 11**

**FIG. 12**

**FIG. 13**

Ray diagram

**FIG. 14A**

Discrete Radon transform (1st octant)

**FIG. 14B**

**FIG. 14C**

**FIG. 15**

Europäisches
Patentamt
European
Patent Office
Office européen
des brevets

# EUROPEAN SEARCH REPORT

Application Number

EP 15 30 6448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TODOR GEORGIEV ET AL: "Lytro camera technology: theory, algorithms, performance analysis", PROCEEDINGS OF SPIE, vol. 8667, 26 February 2013 (2013-02-26), page 86671J, XP055203972, ISSN: 0277-786X, DOI: 10.1117/12.2013581 * the whole document * | 1-12,14 | INV. G06T5/50 |
| A | US 2015/177062 A1 (NISHIYAMA TOMOHIRO [JP]) 25 June 2015 (2015-06-25) * paragraph [0033] - paragraph [0046] * | 1-12,14 | |
| A | ZHU ZHAO ET AL: "Aberration analysis and calculation in system of Gaussian beam illuminates lenslet array", MEDICAL IMAGING 2002: PACS AND INTEGRATED MEDICAL INFORMATION SYSTEMS: DESIGN AND EVALUATION, vol. 9195, 8 September 2014 (2014-09-08), page 91950I, XP055250292, 1000 20th St. Bellingham WA 98225-6705 USA ISSN: 0277-786X, DOI: 10.1117/12.2060476 ISBN: 978-1-5106-0167-3 * Chapter 2: Properties of Gaussian Beam and Lenslet Array * | 1-12,14 | |
| A | US 2014/328535 A1 (SORKINE-HORNUNG ALEXANDER [CH]) 6 November 2014 (2014-11-06) * paragraph [0023] - paragraph [0055] * | 1-12,14 | TECHNICAL FIELDS SEARCHED (IPC) G06T |

~~The present search report has been drawn up for all claims~~

| Place of search | Date of completion of the search | Examiner |
|---|---|---|
| Munich | 9 March 2016 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 15 30 6448

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-12, 14

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 15 30 6448

The Search Division considers that the present European patent application does not comply with the requirements of unity of invention and relates to several inventions or groups of inventions, namely:

```
1. claims: 1-12, 14

       representation of pixel beam data by an hyperboloid of one
       sheet supported by the entrance pupil and the conjugate of
       the pixel in the object space of the camera
                          ---

2. claim: 13

       representation of pixel beam data in light field imaging by
       evaluating the color data of the 2D ray diagram
                          ---
```

## ANNEX TO THE EUROPEAN SEARCH REPORT
## ON EUROPEAN PATENT APPLICATION NO.

EP 15 30 6448

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2016

| Patent document cited in search report | | Publication date | Patent family member(s) | | | Publication date |
|---|---|---|---|---|---|---|
| US 2015177062 | A1 | 25-06-2015 | JP | 2015119395 | A | 25-06-2015 |
| | | | US | 2015177062 | A1 | 25-06-2015 |
| US 2014328535 | A1 | 06-11-2014 | EP | 2806396 | A1 | 26-11-2014 |
| | | | HK | 1200961 | A1 | 14-08-2015 |
| | | | US | 2014328535 | A1 | 06-11-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANAT LEVIN.** Understanding camera trade-offs through a Bayesian analysis of light field projections. *conference proceedings of ECCV 2008 is an hectic research subject,* 2008
- **J.-H. PARK et al.** Light ray field capture using focal plane sweeping and its optical reconstruction using 3D display /. *OPTICS EXPRESS,* October 2014, vol. 22 (21
- **REN NG.** *Digital Light Field Photography,* July 2006
- **S. WANNER.** Generating EPI Representation of a 4D Light Fields with a Single Lens Focused Plenoptic Camera. *conference proceedings of ISVC,* 2011